# EUROPÄISCHE PATENTSCHRIFT

(11) **EP 2 289 963 B1**
(45) Veröffentlichungstag und Bekanntmachung des Hinweises auf die Patenterteilung: **29.05.2013**
(21) Anmeldenummer: 10173644.5
(22) Anmeldetag: 23.08.2010
(51) Int. Cl.: C08G 18/63, C08G 18/78, C08G 18/79, C08G 18/28, C08G 18/62, C08G 18/75

(54) **Beschichtungsmassen mit allophanatgruppenhaltigen Polyisocyanaten**
Coating compounds with polyisocyanates containing allophanate groups
Masses de revêtement dotées de polyisocyanates contenant des groupes allophanate

(30) Priorität: 27.08.2009 EP 09168853
(43) Veröffentlichungstag der Anmeldung: 02.03.2011
(73) Patentinhaber: BASF SE, 67056 Ludwigshafen (DE)
(72) Erfinder: Tuchbreiter, Lydie, 67346, Speyer (DE); Lucas, Frederic, 67063, Ludwigshafen (DE); Steinbrecher, Angelika Maria, 70193, Stuttgart (DE); Jokisch, Carl, 68259, Mannheim (DE)

(56) Entgegenhaltungen:
- EP-A1- 0 649 866
- EP-A2- 0 566 037

## Beschreibung

Die vorliegende Erfindung betrifft neue Beschichtungsmassen mit allophanatgruppenhaltigen Polyisocyanaten auf Basis von Isophorondiisocyanat und deren Verwendung.

WO 99/36455 beschreibt Polyisocyanatgemische auf Basis von 1,6-Hexamethylendiisocyanat und/oder Isophorondiisocyanat, wobei die Polyisocyanate Isocyanurate und Allophanate umfassen. Zur Allophanatbildung werden ausschließlich cyclische Alkohole eingesetzt. Bei dem in den Beispielen eingesetzten Polyol Lumitol® H136 handelt es sich um ein styrol- und acrylsäurehaltiges Polyacrylatpolyol.

JP 07-330860 A beschreibt die Bildung von Polyisocyanatgemischen auf Basis von 1,6-Hexamethylendiisocyanat sowie gegebenenfalls Isophorondiisocyanat, wobei die Polyisocyanate Isocyanurate und Allophanate umfassen. Zur Allophanatbildung werden ausschließlich aliphatische Alkohole mit 6 bis 9 Kohlenstoffatomen eingesetzt.

Eine ähnliche Offenbarung auch mit kürzeren aliphatischen Alkoholen findet sich in US 5258482.

EP 566037 A2 beschreibt Isocyanurate und Allophanate umfassende Polyisocyanatgemische, wobei als Alkoholkomponente 1 bis 10 Kohlenstoffatome aufweisende Monoalkohole eingesetzt werden. Offenbart wird ein Allophanat : Isocyanurat Verhältnis von 4:1 bis 1:10, die den Polyisocyanaten zugrundeliegenden Diisocyanate sind breit offenbart. Explizit offenbart wird in Beispiel 5 ein Polyisocyanat auf Basis Isophorondiisocyanat mit Isobutylalkohol als Alkoholkomponente und einem Allophanat : Isocyanurat Verhältnis von 3:2. Das in diesem Beispiel eingesetzte acrylische Polyol Acrydic A-801 der Dainippon weist eine Säurezahl von 1 bis 4 auf.

Eine ähnliche Offenbarung findet sich in US 5290902. Das in den Beispielen eingesetzte Polyol 2 weist einen Gehalt an Acrylsäure von 1,85 % auf, entsprechend einer Säurezahl von 14.

EP 649866 A1 beschreibt Isocyanurate und Allophanate umfassende Polyisocyanatgemische. Explizit offenbart wird in Beispiel 1 ein Polyisocyanat auf Basis Isophorondiisocyanat mit n-Butanol als Alkoholkomponente und einem Allophanat : Isocyanurat Verhältnis von 12:10. Dieses Polyisocyanatgemisch wird mit einem säuregruppenhaltigen Polyhydroxypolyacrylat zu einer Beschichtungsmasse verarbeitet. Der Gehalt an Säuregruppen entspricht etwa einer Säurezahl von 7,7 mg KOH/g.

Nachteilig an dieser Beschichtungsmasse ist, daß die Chemikalienbeständigkeit unzureichend ist und die sich ergebende Beschichtung spröde ist.

Aufgabe der vorliegenden Erfindung war es, neue zweikomponentige Mischungen aus Polyisocyanaten und Polyolen für zweikomponentige (2K) Polyurethanlacke bereitzustellen, die eine hohe Chemikalienbeständigkeit bei gleichzeitig guter Härte und Kratzbeständigkeit aufweisen und bei einem möglichst niedrigen Gehalt an flüchtigen organischen Verbindungen gute Verlaufseigenschaften zeigen. Zudem sollten die Produkte eine geringe Viskosität aufweisen, damit sie leichter in Lacke einarbeitbar sind, und eine lange Verarbeitbarkeit aufweisen.

Die Aufgabe wurde gelöst durch Mischungen, enthaltend
(A) mindestens ein allophanatgruppenhaltiges Polyisocyanat der Formel (I) 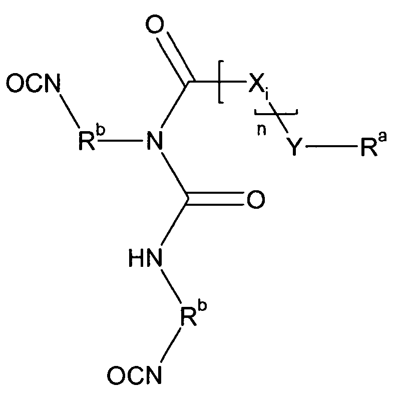 worin
   R^{a} C₁ bis C₅-Alkyl,
   Xᵢ wenn n > 0 für jedes i von 1 bis n unabhängig voneinander ausgewählt ist aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
   worin Ph für Phenyl und Vin für Vinyl steht,
   n 0 oder eine positive Zahl bedeutet, und
   R^{b} einen Rest 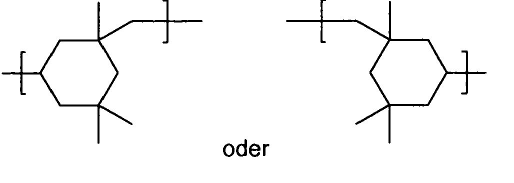 bedeutet,
(B) mindestens ein isocyanuratgruppenhaltiges Polyisocyanat auf Basis Isophorondiisocyanat,
(C) mindestens ein hydroxygruppenhaltiges Styrol-(Meth)acrylat-Copolymer
wobei das hydroxygruppenhaltige Styrol-(Meth)acrylat-Copolymer eine Säurezahl gemäß DIN EN ISO 3682 von nicht mehr als 5 mg KOH/g aufweist und
wobei das molare Verhältnis von (B) zu (A) mehr als 1:1 und weniger als 4:1 beträgt.

In einer bevorzugten Ausführungsform der vorliegenden Erfindung sind keine Gruppen Xᵢ in den Verbindungen der Formel (I) enthalten, d.h. n ist Null.

In einer weiteren Ausführungsform der vorliegenden Erfindung sind Gruppen Xᵢ anwesend und die Gesamtanzahl der Gruppen Xᵢ in der Verbindung der Formel (I), d.h. die Summe der Werte für n, beträgt bis zu zwanzig, bevorzugt drei bis achtzehn, besonders bevorzugt drei bis fünfzehn und ganz besonders bevorzugt drei bis zwölf.

Gemäß dieser Ausführungsform handelt es sich um ethoxylierte und/oder propoxylierte Alkohole, bevorzugt entweder ausschließlich ethoxylierte oder ausschließlich propoxylierte Alkohole und besonders bevorzugt um ausschließlich ethoxylierte Alkohole.

Gruppen R¹ sind beispielsweise Methyl, Ethyl, iso-Propyl, n-Propyl, n-Butyl, iso-Butyl, sek-Butyl, tert-Butyl, n-Pentyl oder iso-Pentyl, bevorzugt sind Methyl, Ethyl, iso-Propyl, n-Propyl, n-Butyl, iso-Butyl und sek-Butyl, besonders bevorzugt ist Methyl, Ethyl, n-Propyl, n-Butyl und iso-Butyl und ganz besonders bevorzugt ist n-Butyl.

Der Rest R^{b} ist abgeleitet von monomerem Isophorondiisocyanat, wobei es erfindungsgemäß eine untergeordnete Rolle spielt, ob die Urethan- bzw. Allophanatgruppe an ein primäres oder sekundäres Kohlenstoffatom gebunden ist. Je nach Reaktionsbedingungen (siehe unten) wird ein größerer Teil der Urethan- bzw. Allophanatgruppen an ein sekundäres Kohlenstoffatom gebunden sein. Gemäß E. Spyrou, Farbe und Lack 106, 10/2006, S. 126-130, kann man beispielsweise die Selektivität der Urethanreaktion durch unterschiedliche Katalysatoren beeinflussen.

Das zahlenmittlere Molekulargewicht Mₙ der allophanatgruppenhaltigen Polyisocyanate der Formel (I) beträgt in der Regel unter 2000, bevorzugt unter 1800, besonders bevorzugt unter 1500, ganz besonders bevorzugt unter 1200 und insbesondere unter 1100 g/mol.

Der NCO-Gehalt (berechnet als NCO mit eine Molgewicht von 42 g/mol) beträgt in der Regel mehr als 5 Gew%, bevorzugt mehr als 6 Gew% und besonders bevorzugt mehr als 8 Gew% und bis zu 17 Gew%, bevorzugt bis zu 15 Gew%.

Neben Allophanatgruppen können die erfindungsgemäßen allophanatgruppenhaltigen Polyisocyanate in untergeordneten Mengen noch weitere reaktive Gruppen tragen, beispielsweise unumgesetzte Hydroxygruppen sowie Isocyanuratgruppen.

Zur Herstellung der allophanatgruppenhaltigen Polyisocyanate werden Isophorondiisocyanat und der entsprechende alkoxylierte Alkohol mit oder ohne Lösungsmittel unter Urethanisierungsbedingungen und anschließend unter Allophanatisierungsbedingungen miteinander umgesetzt.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Die Temperatur beträgt bei dieser Umsetzung in der Regel bis zu 150 °C, bevorzugt bis zu 120 °C, besonders bevorzugt unter 100 °C und ganz besonders bevorzugt unter 90 °C und wird zumeist in Gegenwart mindestens eines Katalysators durchgeführt, der die Urethanisierungs- und/oder Allophanatiserungsreaktion katalysiert. Die Bildung der Urethangruppen kann aber auch in Abwesenheit eines Katalysators durchgeführt werden.

In der Regel sollte die Temperatur der Reaktion mindestens 20 °C betragen, bevorzugt mindestens 30, besonders bevorzugt mindestens 40 und ganz besonders bevorzugt mindestens 50 °C. In einer bevorzugten Ausführungsform beträgt die Reaktionstemperatur mindestens 80 °C.

Katalysatoren sind hierbei solche Verbindungen, die durch ihre Anwesenheit in einem Eduktgemisch zu einem höheren Anteil an urethan- bzw. allophanatgruppenhaltigen Reaktionsprodukten führen als das gleiche Eduktgemisch in deren Abwesenheit unter denselben Reaktionsbedingungen.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Zudem können Zink-(II)-Salze eingesetzt werden, wie beispielsweise Zink-(II)-dioctoat. Auch Metallkomplexe wie Acetylacetonate des Eisens, Titans, Aluminiums, Zirkons, Mangans, Nickels, Zinks und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-dioctoat, Zirkon-Acetylacetonat und Zirkon-2,2,6,6-tetramethyl-3,5-heptandionat.

Auch Wismut-und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻ Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₄⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O4₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Ferner sind als Katalysatoren einsetzbar:
- Organische Metallsalze der Formel (A)ₙ-R-O-CO-O^{⊖}M^{⊕} gemäß US-A-3 817 939, in der bedeuten:
   A eine Hydroxylgruppe oder ein Wasserstoffatom,
   n eine Zahl von 1 bis 3,
   R einen polyfunktionellen linearen oder verzweigten, aliphatischen oder aromatischen Kohlenwasserstoffrest und
   M^{⊕} in Kation, z.B. ein Alkalimetallkation oder ein quarternäres Ammoniumkation, wie Tetraalkylammonium, sowie
- quartäre Hydroxyalkylammoniumverbindungen der Formel

   R²⁴,R²⁵,R²⁶N^{⊕}-CH₂-CH(OH)-R^{27 ⊖}O-(CO)-R²⁸

   als Katalysator gemäß DE-A-26 31 733 (US-A-4 040 992) mit den dort angegeben Definitionen für die Reste.

Besonders geeignet als Katalysatoren für das Verfahren sind quartäre Ammoniumsalze entsprechend der Formel 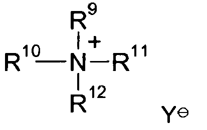 mit
Y^{⊖}= Carboxylat (R¹³COO⁻), Fluorid (F-), Carbonat (R¹³O(CO)O⁻) oder Hydroxid (OH-),
wie sie für Y⁻ = OH⁻ im US-Patent 4,324,879 und in den Deutschen Offenlegungsschriften 2,806,731 und 2,901,479 beschrieben sind.

Bevorzugt handelt es sich bei dem Rest Y^{⊖} um ein Carboxylat, Carbonat oder Hydroxid und besonders bevorzugt um ein Carboxylat oder Hydroxid.

R¹³ ist darin Wasserstoff, C₁ bis C₂₀-Alkyl, C₆ bis C₁₂-Aryl oder C₇ bis C₂₀-Arylalkyl, das jeweils optional substituiert sein kann.

Bevorzugt ist R¹³ Wasserstoff oder C₁ bis C₈-Alkyl.

Bevorzugte quartäre Ammoniumsalze sind diejenigen, bei denen die Reste R⁹ bis R¹² gleiche oder unterschiedliche Alkylgruppen mit 1 bis 20, vorzugsweise 1 bis 4, Kohlenstoffatomen darstellen, die gegebenenfalls durch Hydroxyl- oder Phenylgruppen substituiert sind.

Zwei der Reste R⁹ bis R¹² können auch zusammen mit dem Stickstoffatom und gegebenenfalls einem weiteren Stickstoff- oder Sauerstoffatom einen heterocyclischen, fünf- , sechs- oder siebengliedrigen Ring bilden. Die Reste R⁹ bis R¹¹ können in jedem Falle auch Ethylenreste darstellen, die zusammen mit dem quartären Stickstoffatom und einem weiteren tertiären Stickstoffatom eine bicyclische Triethylendiaminstruktur bilden, vorausgesetzt, daß der Rest R¹² dann eine Hydroxyalkylgruppe mit 2 bis 4 Kohlenstoffatomen darstellt, bei der die Hydroxylgruppe vorzugsweise in der 2-Stellung zu dem quartären Stickstoffatom angeordnet ist. Der hydroxysubstituierte Rest oder die hydroxysubstituierten Reste können auch andere Substituenten enthalten, beispielsweise C₁- bis C₄-Alkyloxy-Substituenten.

Dabei können die Ammoniumionen auch Teil eines ein- oder mehrgliedrigen Ringsystems sein, beispielsweise abgeleitet von Piperazin, Morpholin, Piperidin, Pyrrolidin, Chinuclidin oder 1,4-Di-aza-bicyclo-[2.2.2]-octan.

Beispiele für 1 bis 20 Kohlenstoffatome aufweisende Gruppen R⁹ bis R¹² sind unabhängig voneinander Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Nonyl, Isononyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, 2-Hydroxyethyl, 2-Hydroxypropyl, 3-Hydroxypropyl, 4-Hydroxybutyl, 6-Hydroxyhexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, Phenyl, Tolyl, Xylyl, α -Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Methylnaphthyl, Isopropylnaphthyl, Chlornaphthyl, 2,6-Dimethylphenyl, 2,4,6-Trimethylphenyl, 2,6-Dimethoxyphenyl, 2,6-Dichlorphenyl, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Chlorcyclohexyl, Dichlorcyclohexyl, Dichlorcyclopentyl, Norbornyl oder Norbornenyl.

Bevorzugte sind unabhängig voneinander die Reste R⁹ bis R¹² C₁ bis C₄-Alkyl. R¹² kann zusätzlich Benzyl sein oder ein Rest der Fomel 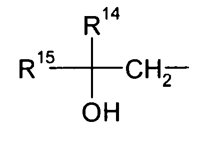 worin R¹⁴ und R¹⁵ unabhängig voneinander Wasserstoff oder C₁ bis C₄-Alkyl sein kann.

Besonders bevorzugte Reste R⁹ bis R¹² sind unabhängig voneinander Methyl, Ethyl und n-Butyl und für R¹² zusätzlich Benzyl, 2-Hydroxyethyl und 2-Hydroxypropyl.

Bevorzugt können für das erfindungsgemäße Verfahren folgende Katalysatoren eingesetzt werden:

Quarternäre Ammoniumhydroxide, vorzugsweise N,N,N-Trimethyl-N-benzylammoniumhydroxid und N,N,N-Trimethyl-N-(2-hydroxypropyl)-ammoniumhydroxid, gemäß DE-A-38 06 276.

Hydroxyalkyl substituierte quarternäre Ammoniumhydroxide gemäß EP-A-10 589 (US-A-4 324 879).

Organische Metallsalze der Formel (A)ₙ-R-O-CO-O^{⊖}M^{⊕} gemäß US-A-3 817 939, in der bedeuten, A eine Hydroxylgruppe oder ein Wasserstoffatom, n eine Zahl von 1 bis 3, R einen polyfunktionellen linearen oder verzweigten, aliphatischen oder aromatischen Kohlenwasserstoffrest und M ein Kation einer starken Base, z.B. ein Alkalimetallkation oder ein quarternäres Ammoniumkation, wie Tetraalkylammonium.

Bevorzugte Katalysatoren sind Zink-(II)-Salze, unter diesen besonders Zink Acetylacetonat.

Weiterhin bevorzugt sind die genannten Cäsium- und Wismutsalze.

Mit derartigen Katalysatoren ist es möglich, bei der Reaktion die auftretende Bildung von anderen Polyisocyanaten als (A) und (B) zurückzudrängen. Somit ist es möglich, Reaktionsgemische zu erhalten, in denen das Verhältnis von isocyanuratgruppenhaltigen Polyisocyanaten zu allophanatgruppenhaltigen Polyisocyanaten mehr als 1:1 und weniger als 4:1, bevorzugt mehr als 1,1:1 und nicht mehr als 3,5:1, besonders bevorzugt mehr als 1,5:1 und nicht mehr als 3,5:1 und ganz besonders bevorzugt mindestens 2:1 bis 3,5:1 beträgt.

Der Katalysator wird je nach Aktivität normalerweise in Mengen von 0,001 bis 10 mol% bzgl. eingesetzter Isocyanatgruppen eingesetzt, bevorzugt 0,01 bis 8, besonders bevorzugt 0,05 bis 7 mol%.

Isophorondiisocyanat wird zumeist in mindestens doppelt äquimolarer Stöchiometrie bezogen auf die Hydroxygruppen im Alkohol eingesetzt, bevorzugt in einem 2,5 bis 20-fachem Überschuß von Isophorondiisocyanat zu Hydroxygruppen im Alkohol, bevorzugt im 3 bis 15- und besonders bevorzugt im 9 bis 10-fachen Überschuß.

Der unumgesetzte Teil Isophorondiisocyanat kann entweder im Reaktionsgemisch verbleiben oder wird bevorzugt abgetrennt, bevorzugt über eine Destillation, beispielsweise Kurzweg- oder Dünnschichtdestillation.

Der Gehalt an nicht umgesetztem Isophorondiisocyanat im Reaktionsgemisch beträgt in der Regel unter 1 Gew%, bevorzugt unter 0,5 Gew% und besonders bevorzugt unter 0,3 Gew%.

Die Reaktion wird bevorzugt ohne Lösungsmittel durchgeführt, kann aber auch in Gegenwart mindestens eines Lösungsmittel durchgeführt werden. Erfindungsgemäß kann das erhaltene Reaktionsgemisch nach Beendigung der Reaktion in einem Lösungsmittel formuliert werden, wenn nicht bereits die Herstellung des Allophanats in mindestens einem Lösungsmittel durchgeführt wurde.

Als Lösungsmittel einsetzbar sind solche, die keine gegenüber Isocyanatgruppen reaktiven Gruppen aufweisen und in denen die Polyisocyanate zu mindestens 10 Gew%, bevorzugt zu mindestens 25, besonders bevorzugt zu mindestens 50, ganz besonders bevorzugt zu mindestens 75, insbesondere zu mindestens 90 und speziell zu mindestens 95 Gew% löslich sind.

Beispiele für derartige Lösungsmittel sind aromatische (einschließlich alkylierter Benzole und Naphthaline) und/oder (cyclo)aliphatische Kohlenwasserstoffe und deren Gemische, chlorierte Kohlenwasserstoffe, Ketone, Ester, alkoxylierte Alkansäurealkylester, Ether, respektive Gemische der Lösungsmittel.

Als aromatisch Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Der Gehalt an aliphatischen Kohlenwasserstoffen beträgt in der Regel weniger als 5, bevorzugt weniger als 2,5 und besonders bevorzugt weniger als 1 Gew%.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon und tert-Butylmethylketon.

Bevorzugt ist das erfindungsgemäße mindestens eine Lösungsmittel ausgewählt aus der Gruppe bestehend aus Ethylacetat, n-Butylacetat, 1-Methoxy-2-propylacetat, 9 Kohlenstoffatome aufweisende aromatische Kohlenwasserstoffe, 10 Kohlenstoffatome aufweisende aromatische Kohlenwasserstoffe und Xylol.

Die erfindungsgemäßen allophanatgruppenhaltigen Polyisocyanatgemische aus (A) und (B) finden beispielsweise Anwendung in zweikomponentigen Polyurethanlacken mit mindestens einer Komponente, die gegenüber Isocyanat reaktive Gruppen enthalten (Bindemittel). Dazu können sie allein oder im Gemisch mit anderen Polyisocyanaten (D) als diesen erfindungsgemäßen allophanatgruppenhaltigen Polyisocyanatgemischen als Vernetzerkomponente eingesetzt werden.

Derartige andere Polyisocyanate (D) sind durch Oligomerisierung von monomeren Isocyanaten erhältlich.

Die eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, moder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclo-hexan und 4,4'- oder 2,4'-Di(isocyanatocyclohexyl)methan, ganz besonders bevorzugt ist 1,6-Hexamethylendiisocyanat.

Es können auch Gemische der genannten Isocyanate vorliegen.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate, zu denen die monomeren Isocyanate oligomerisiert werden können, sind in der Regel wie folgt charakterisiert:

Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den anderen Polyisocyanaten als den erfindungsgemäßen allophanatgruppenhaltigen Polyisocyanaten um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat. Bei den dabei vorliegenden Isocyanuraten handelt es sich insbesondere um Trisisocyanatoalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den andereren Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat, mit ein- oder mehrwertigen Alkoholen (A). Diese Urethan- und/oder Allophanatgruppen aufweisenden Polyisocyanate haben im allgemeinen einen NCO-Gehalt von 12 bis 24 Gew.-% und eine mittlere NCO-Funktionalität von 2,5 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Zn-(II)-Verbindungen, jeweils in Anwesenheit von ein-, zwei- oder mehrwertigen, bevorzugt einwertigen Alkoholen, hergestellt werden.
5) Oxadiazintriongruppen enthaltende Polyisocyanate, vorzugsweise von Hexamethylendiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, gegebenenfalls in Gegenwart von geeigneten Katalysatoren. Diese Biuret- oder Urethan-/Allophanatgruppen aufweisenden Polyisocyanate weisen im allgemeinen einen NCO-Gehalt von 18 bis 22 Gew.-% und eine mittlere NCO-Funktionalität von 2,8 bis 6 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-12 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Moleküle handelt es sich beispielsweise um Hydroxyalkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat (D) ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten, insbesondere handelt es sich um ein isocyanuratgruppenhaltiges Polyisocyanat.

In einer besonders bevorzugten Ausführungsform handelt es sich bei dem Polyisocyanat um Isocyanuratgruppen enthaltende Polyisocyanate von 1,6-Hexamethylendiisocyanat.

In einer besonders bevorzugten Ausführungsform handelt es sich bei dem Polyisocyanat um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Die erfindungsgemäßen allophanatgruppenhaltigen Polyisocyanatgemsiche aus (A) und (B) können gegebenenfalls im Gemisch mit anderen Polyisocyanaten (D) als Vernetzerkomponenten mit mindestens einem Bindemittel (C) in Polyurethanlacken eingesetzt werden.

In der Regel werden für Polyisocyanatzusammensetzungen, also die Summe der isocyanatgruppenhaltigen Verbindungen,
10 bis 100 Gew% der erfindungsgemäßen allophanatgruppenhaltigen Polyisocyanatgemische (A) und (B) eingesetzt, bevorzugt 15 bis 90 Gew% und besonders bevorzugt 20 bis 80 Gew%, und
0 bis 80 Gew% andere Polyisocyanate (D), bevorzugt 10 bis 75, besonders bevorzugt 20 bis 70 Gew%,
mit der Maßgabe, daß die Summe immer 100 Gew% beträgt.

Bei den Bindemitteln (C) handelt es sich erfindungsgemäß um mindestens ein hydroxygruppenhaltiges Styrol-(Meth)acrylat-Copolymer, das (Meth)acrylatgruppen und Styrol in einpolymerisierter Form enthält und eine Säurezahl gemäß DIN EN ISO 3682 von nicht mehr als 5 mg KOH/g, bevorzugt nicht mehr als 4, besonders bevorzugt nicht mehr als 3, ganz besonders bevorzugt nicht mehr als 2 und insbesondere nicht mehr als 1 mg KOH/g aufweist.

In einer bevorzugten Ausführungsform enthält das Styrol-(Meth)acrylat-Copolymer (C) keine freie Säure einpolymerisiert, insbesondere keine Acrylsäure, Methacrylsäure, Vinylphosphonsäure oder Vinylsulphonsäure.

Untergeordnete Mengen an Säuregruppen können durch Hydrolyse des einpolymeriserten (Meth)acrylsäureesters enthalten sein. Diese bestimmen jedoch in der Regel nicht die Eigenschaften des Styrol-(Meth)acrylat-Copolymers.

Bevorzugte OH-Zahlen, gemessen gemäß DIN 53240-2, sind 15-250 mg KOH/g Festharz für Polyacrylatole, bevorzugt 40-200 mg KOH/g, besonders bevorzugt 70 bis 180 mg KOH/g.

Durch die erfindungsgemäße Verwendung eines säurearmen Harzes ergibt die Beschichtung eine höhere Beständigkeit gegen Chemikalien und geringere Sprödigkeit und eine verbesstere Stabilität gegen Hydrolyse.

Styrol-(Meth)acrylat-Copolymere (C) weisen bevorzugt ein Molekulargewicht Mₙ von mindestens 500, besonders bevorzugt mindestens 700 und ganz besonders bevorzugt mindestens 1000 g/mol auf. Das Molekulargewicht Mₙ kann prinzipiell nach oben unbegrenzt sein, bevorzugt bis 200.000, besonders bevorzugt bis zu 100.000, ganz besonders bevorzugt bis zu 80.000 und insbesondere bis zu 50.000 g/mol betragen. Speziell beträgt das zahlenmittlere Molekulargewicht Mₙ bis zu 20.000, sogar bis zu 10.000 und im Besonderen bis zu 5.000.

Die Hydroxygruppen werden in die Polyole eingeführt über hydroxygruppenhaltige (Meth)acrylate, beispielsweise Monoester von α,β-ungesättigten Carbonsäuren, wie Acrylsäure, Methacrylsäure (in dieser Schrift kurz als "(Meth)acrylsäure" bezeichnet), mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4500, bevorzugt 250 bis 2000, Poly-1,3-propandiol oder Polypropylenglykol mit einem Molgewicht zwischen 134 und 2000 oder Polyethylenglykol mit einem Molgewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Die hydroxygruppentragenden Monomere werden in die Copolymerisation im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew% aus C₁-C₁₀-Alkyl(meth)acrylaten, Styrol und dessen Derivate, Vinylimidazol oder deren Mischungen bestehen.

Darüber können die Polymere hydroxyfunktionelle Monomere entsprechend dem obigen Hydroxygruppengehalt und gegebenenfalls weitere Monomere enthalten, z.B. (Meth)acrylsäureglycidylepoxyester, ethylenisch ungesättigte Säuren, insbesondere Carbonsäuren, Säureanhydride oder Säureamide.

In einer bevorzugten Ausführungsform handelt es sich bei dem Styrol-(Meth)Acrylat-Copolymer (C) um solche Copolymere, bei denen es sich um durch radikalische Polymerisation erhältliche Copolymere handelt, die als Monomere in eingebauter Form enthalten können
(i) mindestens ein vinylaromatisches Monomer, bevorzugt ausgewählt aus der Gruppe bestehend aus Styrol und alpha-Methylstyrol, besonders bevorzugt Styrol,
(ii) mindestens einen C₁- bis C₈-Alkylester der Acrylsäure oder Methacrylsäure, in dieser Schrift als (Meth)acrylsäure bezeichnet, bevorzugt Acrylsäure,
(iii) mindestens ein hydroxygruppenhaltiges (Meth)acrylat, bevorzugt 2-Hydroxyethyl(meth)acrylat oder 2-Hydroxypropyl(meth)acrylat, und
(iv) optional andere als die unter (i) bis (iii) genannten Monomere, die radikalisch polymerisierbar sind, bevorzugt Acrylnitril oder Acrylamid.

Bevorzugte Monomere (ii) sind Methylacrylat, Ethylacrylat, n-Butylacrylat, 2-Ethylhexylacrylat, n-Octylacrylat, Methylmethacrylat, Ethylmethacrylat und n-Butylmethacrylat,.

Derartige Copolymere können ein zahlenmittleres Molekulargewicht Mw, bestimmt per Gelpermeationschromatographie in THF als Lösungsmittel und Polystyrol als Standard, kann von 1.000 bis 1.500.000 aufweisen.

Üblicherweise sind sie wie folgt aufgebaut:
Monomere (i): 1-40 Gew% Styrol und/oder alpha-Methylstyrol
Monomere (ii): 0-45 Gew% n-Butylacrylat, 0-30 Gew% 2-Ethylhexylacrylat, und
Monomere (iii): 1-40 Gew% 2-Hydroxyethylacrylat und/oder 1-35% 2-Hydroxyethylmethacrylat.

Bevorzugt sind derartige Copolymere über Massepolymerisation und Emulsionspolymerisation erhältlich, besonders bevorzugt über Massepolymerisation.

Polyisocyanatzusammensetzung und Bindemittel werden in einem Molverhältnis von Isocyanatgruppen zu gegenüber Isocyanat reaktiven Gruppen von 0,1:1 bis 10:1, bevorzugt 0,2:1 bis 5:1, besonders bevorzugt 0,3:1 bis 3:1, ganz besonders bevorzugt 0,5:1 bis 2:1, insbesondere 0,8:1 bis 1,2:1 und speziell 0,9:1 bis 1,1:1 miteinander vermischt, wobei gegebenenfalls noch weitere lacktypische Bestandteile eingemischt werden können, und auf das Substrat aufgetragen.

Anschließend wird das Lackgemisch unter geeigneten Bedingungen ausgehärtet. Je nach Anwendung kann dies beispielsweise bei 100 bis 140 °C erfolgen, beispielsweise bei Lacken in OEM-Anwendungen, oder in einem niedrigeren Temperaturintervall von beispielsweise 20 bis 80 °C.

Dies erfordert je nach Temperatur in der Regel nicht mehr 12 Stunden, bevorzugt bis zu 8 Stunden, besonders bevorzugt bis zu 6, ganz besonders bevorzugt bis zu 4 und insbesondere bis zu 3 Stunden.

Ferner können Beschichtungsmassen 0 bis 10 Gew% mindestens eines UV Stabilisators enthalten.

Geeignete Stabilisatoren umfassen typische UV-Absorber wie Oxanilide, Triazine und Benzotriazol (letztere erhältlich als Tinuvin® -Marken der Ciba-Spezialitätenchemie) und Benzophenone.

Diese können zusätzlich 0 bis 5 Gew% geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat enthalten.

Ferner können Beschichtungsmassen weiterhin 0 bis 10 Gew% weiterer lacktypischer Additive enthalten.

Als weitere lacktypische Additive können beispielsweise Antioxidantien, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminoessigsäure und deren Salze sowie β -Diketone verwendet werden.

Geeignete Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Beschichtungsmasse, gegebenenfalls unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Weiterhin sind auch Substrate, beschichtet mit einem Lack, der die erfindungsgemäßen allophanatgruppenhaltigen Polyisocyanate enthält, Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich prinzipiell zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können. Besonders bevorzugt sind sie jedoch zum Beschichten von Kunststoffoberflächen und metallischen Substraten geeignet.

Bevorzugt werden diese Beschichtungsmassen als Klar-, Basis- und Decklacke(n), Primern und Füller eingesetzt, besonders eignen sie sich durch ihre hohe Kratzfestigkeit als Decklack, bevorzugt als Klarlack, insbesondere in Beschichtungen auf (Groß)Fahrzeugen und Flugzeugen und in Automobillacken als OEM und refinish-Anwendung.

Es ist ein Vorteil der erfindungsgemäßen allophanatgruppenhaltigen Polyisocyanate, daß sie in Klarlacken eine hohe Härte bei gleichzeitig guter Elastizität ergeben. Zudem ergeben die erfindungsgemäßen Produkte eine hohe Funktionalität.

### Beispiele

### Polyisocyanat 1 (erfindungsgemäß):

1800 g (9,1 mol) 3-Isocyanatomethyl-3,5,5-trimethyl-cyclo-hexylisocyanat-1 (IPDI) wurden bei 80°C mit 59,9 g (0,81 mol) 1-Butanol gemischt. Anschließend wurden unter Eiskühlung 0,49 g von 2-Hydroxypropyltrimethylammonium octoat 75%ig (DABCO TMR^{®}, Air Products) zugesetzt. Nach 20 Minuten bei 80°C betrug der NCO-Gehalt 30,9%. Nach Stoppen mit 0,41 g Bis-(2-Ethylhexylphosphat) wurde das Rohprodukt einer Dünnschichtdestillation im Hochvakuum (2 mbar) bei einer Temperatur von 185°C unterworfen. Die Isocyanurat-/ Allophanatmischung wurde 70 %ig in Butylacetat gelöst (NCO-Gehalt 11,2% und Viskosität 200 mPa*s), Gehalt an Monoisocyanurat : Monoallophanat: 1 : 0,63.

### Polyisocyanat 2 (erfindungsgemäß):

570 g (2,57 mol) 3-Isocyanatomethyl-3,5,5-trimethyl-cyclo-hexylisocyanat-1 (IPDI) wurden bei 80°C mit 38,5 g (0,08 mol) eines Methanol-gestarteten, monofunktionellen Polyethylenoxid von Molgewicht 500 g/mol gemischt. Anschließend wurden unter Eiskühlung 0,33 g von 2-Hydroxypropyltrimethylammonium octoat 75%ig (DABCO TMR^{®}, Air Products) zugesetzt. Nach 30 Minuten bei 80°C betrug der NCO-Gehalt 27,0% und die Reaktion wurde mit 0,37 g von Bis-(2-Ethylhexylphosphat) abgestoppt. Das Rohprodukt wurde einer Dünnschichtdestillation im Hochvakuum (2 mbar) bei einer Temperatur von 185°C unterworfen. Die Isocyanurat-/ Allophanatmischung wurde 70 %ig in Butylacetat gelöst (NCO-Gehalt 9,9 % und Viskosität 48 mPa*s), Gehalt an Monoisocyanurat : Monoallophanat: 1 : 0,4.

### Polyisocyanat 3:

700 g (3,15 mol) 3-Isocyanatomethyl-3,5,5-trimethyl-cyclo-hexylisocyanat-1 (IPDI) wurden bei 80°C mit 23,3 g (0,32 mol) 1-Butanol gemischt. Anschließend wurden unter Eiskühlung 0,39 g 2-Hydroxypropyltrimethylammonium octoat 75%ig (DABCO TMR^{®}, Air Products) zugesetzt. Nach 20 Minuten bei 80°C betrug der NCO-Gehalt 34,4%. Daher wurden weitere 0,39 g Katalysator zugesetzt. Nach weiteren 5 min betrug der NCO-Gehalt 32,4%, die Reaktion wurde mit 0,89 g von Bis-(2-Ethylhexylphosphat) abgestoppt. Das Rohprodukt wurde einer Dünnschichtdestillation im Hochvakuum (2 mbar) bei einer Temperatur von 185°C unterworfen. Die Isocyanurat-/ Allophanatmischung wurde 70 %ig in Butylacetat gelöst (NCO-Gehalt 9,8 % und Viskosität 140 mPa*s), Gehalt an Monoisocyanurat : Monoallophanat: 1 : 1,6.

### Polyisocyanat 4 (Vergleich):

Bei Polyisocyanat handelt es sich um ein handelsübliches HDI-Isocyanurat (Basonat^{®} HI 100 der Fa. BASF SE) mit einem NCO-Wert von 22,0% und einer Viskosität 3000 mPa*s.

### Polyisocyanat 5 (Vergleich):

Bei Polyisocyanat handelt es sich um eine handelsübliche, 70%ige Lösung eines IPDI-Isocyanurates (Basonat^{®} IT 170 B der Fa. BASF SE) mit einem NCO-Wert von 12,1% und einer Viskosität 600 mPa*s.

### Anwendungstechnische Prüfung:

Die erfindungsgemäßen sowie Vergleichspolyisocyanate, wurden mit acrylsäurefreien, hydroxyfunktionellen Polyacrylatpolyolen (Joncryl^{®} 922, Fa. BASF; Festgehalt = 80%; OH-Zahl = 143 mg KOH/g bzw. Joncryl^{®} 909, Fa. BASF; Festgehalt = 68%; OH-Zahl = 92 mg KOH/g) entsprechend einen stöchiometrischen NCO/OH-Verhältnis von 1:1 gemischt und mit Butylacetat auf einer Applikationsviskosität von 20 s (DIN 53 211 Becher 4 mm Auslaufsdüse) eingestellt. Die IPDI-haltigen Polyisocyanate (Polyisocyanate 1 bzw. 4) wurden vor der Formulierung mit Polyisocyanat 4 im Verhältnis 3:7 (bezogen auf NCO) abgemischt. Mit einem Ziehrahmen wurden Beschichtungen mit einer Nassfilmdicke von 200 µm auf Metallbleche aufgetragen. Die so enthaltenen Klarlacke wurden nach 10 Minuten Ablüftungszeit bei Raumtemperatur bzw. für die Bestimmung der Kratzfestigkeit und Säurebeständigkeit bei 60°C über einen Zeitraum von 30 Minuten gehärtet. Vor den Prüfungen wurden die Lackfilme über 24 h bei 23 ± 2 °C und 50 ± 10 % Luftfeuchte gelagert.

### Testverfahren:

Als Gelierzeit wird die Zeitspanne zwischen Lackformulierung und vollständiger Gelierung des Lackes betrachtet.

Zur Ermittlung der Trockengeschwindigkeit der Lackoberfläche wurde der Lack nach Applikation im regelmäßigen Abständen mit einem Wattebausch berührt. Der Test wird beendet, sobald keine Wattefasern mehr an der Lackoberfläche haften bleiben.

Die Pendelhärte (PD) wurde nach König bestimmt (EN ISO 1522).

Die Bestimmung des Gitterschnitts erfolgte nach EN ISO 2409. Dabei liegen die Noten zwischen 0 (sehr gute Haftfestigkeit) und 5 (sehr schlechte Haftfestigkeit).

Zur Bestimmung der Kratzfestigkeit des Lackes wird die Oberfläche mit einem korundpartikelhaltigen Scheuervlies unter einem Gewicht von 500g zerkratzt. Die Beschädigung wird über den Glanzwert des Lackes ermittelt. Der Reflow wird durch Tempern bei 60°C über 15 Stunden nach Zerkratzung über 50 Doppelhübe ermittelt.

Die Prüfung der Schwefelsäurebeständigkeit (Etchtest) erfolgte nach EN ISO 2812-1 (Verfahren3) im Temperaturbereich von 35-75°C.

| Formulierung | | Vergleich 1 | Vergleich 2 | Beispiel 1 |
|---|---|---|---|---|
| Polyisocyanat 4 | | 12,39 | 8,46 | 8,00 |
| Polyisocyanat 5 | | | 6,65 | |
| Polyisocyanat 1 | | | | 6,74 |
| Joncryl^{®} 922 | | 32,50 | 31,72 | 30,00 |
| Butylacetat | | 17,50 | 16,75 | 15,50 |
| | | | | |
| NFA | | 61,5% | 60,5% | 61,0% |
| VOC | (g / L) | 392,58 | 401,41 | 396,71 |
| Gelierzeit | (h : min) | 5h 28min | 7h 16min | 8h 28min |
| Wattetest | (min) | 255 | 140 | 110 |
| Pendeldämpfungsanstieg | (Schläge) | | | |
| | 4h | 3 | 2 | 3 |
| | 7 h | 6 | 13 | 11 |
| | 24 h | 50 | 58 | 52 |
| | 3 Tage | 55 | 71 | 57 |
| | 7 Tage | 60 | 78 | 73 |
| | + 15h 60°C | 90 | 105 | 104 |
| Kratztest | Glanz ( 60° ) | 97,7 | 98,2 | 97,7 |
| Kratztest | 10 DH ( 60° ) | 5,4 | 5,7 | 31,0 |
| Etchtest | erste Anätzung ( °C ) | 35,5°C | 36,0°C | 37,0°C |

| Formulierung | | Vergleich 3 | Beispiel 2 |
|---|---|---|---|
| Polyisocyanat 4 | | 8,12 | 5,69 |
| Polyisocyanat 5 | | | |
| Polyisocyanat 1 | | | 4,79 |
| Joncryl^{®} 909 | | 30,00 | 30,00 |
| Butylacetat | | 20,00 | 22,00 |
| | | | |
| NFA | | 49,1% | 49,5% |
| VOC | (g / L) | 508,66 | 500,33 |
| Gelierzeit | ( h : min ) | 2h 49min | 3h 54min |
| Pendeldämpfungsanstieg | (Schläge) | | |
| | 4 h | 27 | 18 |
| | 7 h | 37 | 31 |
| | 24 h | 44 | 51 |
| | 4 Tage | 53 | 73 |
| | 7 Tage | 58 | 82 |
| | + 15h 60°C | 96 | 102 |
| Kratztest | Glanz ( 60° ) | 97,6 | 97,5 |
| Kratztest | 10 DH ( 60° ) | 30,2 | 44,0 |
| Kratztest | 50 DH ( 60° ) | 23,8 | 29,3 |
| Kratztest | Reflow 1h, 60°C ( 60° ) | 24,0 | 40,7 |

| Formulierung | | Vergleich 4 | Beispiel 3 | Beispiel 4 |
|---|---|---|---|---|
| Polyisocyanat 4 | | 12,39 | 16,01 | 16,01 |
| Polyisocyanat 3 | | | 15,40 | |
| Polyisocyanat 2 | | | | 15,25 |
| Joncryl 922 | | 32,50 | 60,00 | 60,00 |
| Butylacetat | | 17,50 | 31,00 | 32,00 |
| NFA (nichtflüchtiger Anteil) | | 61,5% | 61,2% | 60,7% |
| Gelierzeit | ( h : min ) | 4h 57min | 7h 35min | 7h 34min |
| Pendeldämpfungsanstieg | (Schläge) | | | |
| Pd.-anstieg | 4 h | 3 | 5 | 4 |
| Pd.-anstieg | 7 h | 12 | 18 | 17 |
| Pd.-anstieg | 24 h | 68 | 61 | 41 |
| Pd.-anstieg | 3 Tage | 76 | 87 | 82 |
| Pd.-anstieg | 7 Tage | 78 | 94 | 90 |
| Pd.-anstieg | + 15h 60°C | 91 | 109 | 104 |
| Kratztest | Glanz ( 60° ) | 100,6 | 99,8 | 99,6 |
| Kratztest | 10 DH ( 60° ) | 6,5 | 41,6 | 30,6 |
| Kratztest | 50 DH ( 60° ) | 4,7 | 17,1 | 15,5 |
| Kratztest | Reflow ( 60° ) | 5,4 | 24,0 | 17,1 |

## Patentansprüche

1. Mischungen, enthaltend
(A) mindestens ein allophanatgruppenhaltiges Polyisocyanat der Formel (I) 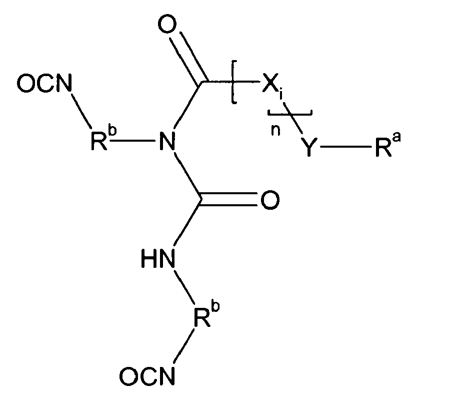 worin
R^{a} C₁ bis C₅-Alkyl,
Xᵢ wenn n > 0 für jedes i von 1 bis n unabhängig voneinander ausgewählt ist aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, - CH₂-CH(CH₃)-O- und -CH(CH₃)-CH₂-O-, und besonders bevorzugt -CH₂-CH₂-O-,
worin Ph für Phenyl und Vin für Vinyl steht,
n 0 oder eine positive Zahl bedeutet, und
R^{b} einen Rest 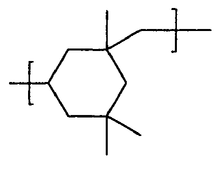 oder 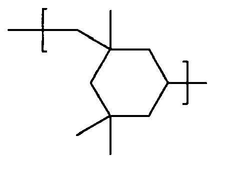 bedeutet,
(B) mindestens ein isocyanuratgruppenhaltiges Polyisocyanat auf Basis Isophorondiisocyanat,
(C) mindestens ein hydroxygruppenhaltiges Styrol-(Meth)acrylat-Copolymer
wobei das hydroxygruppenhaltige Styrol-(Meth)acrylat-Copolymer eine Säurezahl gemäß DIN EN ISO 3682 von nicht mehr als 5 mg KOH/g aufweist und
wobei das molare Verhältnis von (B) zu (A) mehr als 1:1 und weniger als 4:1 beträgt.

2. Mischungen gemäß Anspruch 1, **dadurch gekennzeichnet, daß** n gleich Null ist.

3. Mischungen gemäß Anspruch 1 oder 2, **dadurch gekennzeichnet, daß** R^{a} ausgewählt ist aus der Gruppe bestehend aus Methyl, Ethyl, n-Propyl, n-Butyl und iso-Butyl.

4. Mischungen gemäß einem der vorstehenden Ansprüche, **dadurch gekennzeichnet, daß** das Styrol-(Meth)acrylat-Copolymer (C) keine freie Säure einpolymerisiert enthält, insbesondere keine Acrylsäure, Methacrylsäure, Vinylphosphonsäure oder Vinylsulphonsäure.

## Claims

1. A mixture comprising
(A) at least one polyisocyanate, containing allophanate groups, of the formula (I) 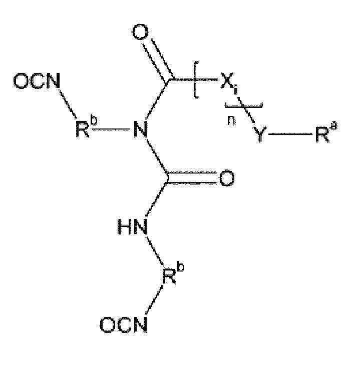 in which
R^{a} is C₁ to C₅ alkyl,
Xᵢ if n > 0, for each i from 1 to n, is selected independently from the group consisting of -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-,-CH₂-CHPh-O-, and -CHPh-CH₂-O-, preferably from the group -CH₂-CH₂-O-, -CH₂-CH (CH₃) -0-, and -CH (CH₃) -CH₂-O- , and more preferably -CH₂-CH₂-O-,
in which Ph is phenyl and Vin is vinyl,
n is 0 or a positive number, and
R^{b} is a radical 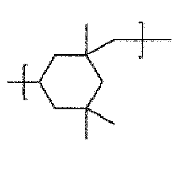 or 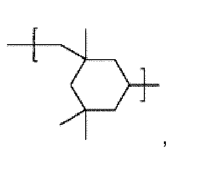
(B) at least one polyisocyanate, containing isocyanurate groups, based on isophorone diisocyanate,
(C) at least one styrene- (meth) acrylate copolymer containing hydroxyl groups,
the styrene-(meth)acrylate copolymer containing hydroxyl groups having an acid number in accordance with DIN EN ISO 3682 of not more than 5 mg KOH/g, and
the molar ratio of (B) to (A) being more than 1:1 and less than 4:1.

2. The mixture according to claim 1, wherein n is zero.

3. The mixture according to claim 1 or 2, wherein R^{a} is selected from the group consisting of methyl, ethyl, n-propyl, n-butyl, and isobutyl.

4. The mixture according to any of the preceding claims, wherein the styrene-(meth)acrylate copolymer (C) contains no free acid in copolymerized form, more particularly no acrylic acid, methacrylic acid, vinylphosphonic acid, or vinylsulphonic acid.

## Revendications

1. Mélanges, contenant
(A) au moins un polyisocyanate contenant des groupes allophanate, de formule (I) 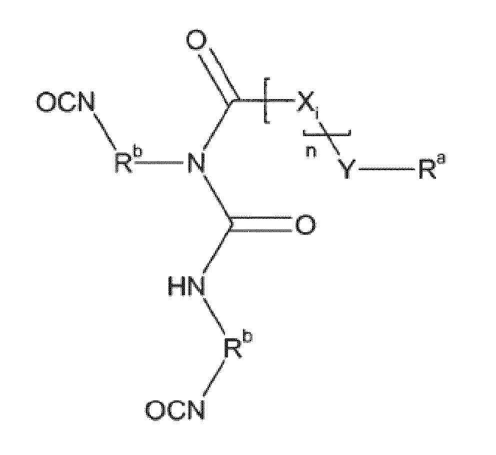 dans laquelle
R^{a} représente un groupe alkyle en C₁-C₅,
Xᵢ lorsque n est > 0 est choisi pour chaque i de 1 à n indépendamment les uns des autres dans l'ensemble constitué par -CH₂-CH₂-O-, -CH₂-CH(CH₃)-O-, -CH(CH₃)-CH₂-O, -CH₂-C(CH₃)₂-O-, -C(CH₃)₂-CH₂-O-, -CH₂-CHVin-O-, -CHVin-CH₂-O-,-CH₂-CHPh-O- et -CHPh-CH₂-O-, de préférence dans l'ensemble constitué par -CH₂-CH₂-O-, -CH₂-CH(CH₃)-O- et -CH(CH₃)-CH₂-O-, et de façon particulièrement préférée -CH₂-CH₂-O-,
où Ph représente le groupe phényle et Vin le groupe vinyle,
n représente 0 ou un nombre positif, et
R^{b} représente un radical 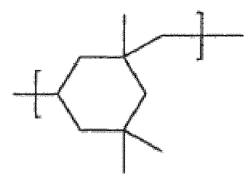 ou 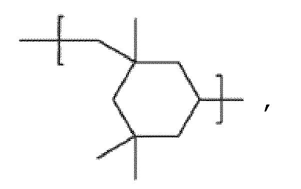
(B) au moins un polyisocyanate contenant des groupes isocyanurate, à base d'isophorone-diisocyanate,
(C) au moins un copolymère styrène/(méth)acrylate contenant des groupes hydroxy
le copolymère styrène/(méth)acrylate contenant des groupes hydroxy présentant un indice d'acide selon DIN EN ISO 3682 n'excédant pas 5 mg de KOH/g et
le rapport molaire de (B) à (A) étant supérieur à 1:1 et inférieur à 4:1.

2. Mélanges selon la revendication 1, **caractérisés en ce que** n est égal à zéro.

3. Mélanges selon la revendication 1 ou 2, **caractérisés en ce que** R^{a} est choisi dans l'ensemble constitué par les groupes méthyle, éthyle, n-propyle, n-butyle et isobutyle.

4. Mélanges selon l'une quelconque des revendications précédentes, **caractérisés en ce que** le copolymère styrène/(méth)acrylate (C) ne contient pas d'acide libre incorporé par polymérisation, en particulier pas d'acide acrylique, méthacrylique, vinylphosphonique ou vinylsulfonique.
